(19) **Europäisches Patentamt**

**European Patent Office**

**Office européen des brevets**

(11) Veröffentlichungsnummer : **0 288 763 B1**

# (12) EUROPÄISCHE PATENTSCHRIFT

(45) Veröffentlichungstag der Patentschrift :
**15.05.91 Patentblatt 91/20**

(21) Anmeldenummer : **88105039.7**

(22) Anmeldetag : **29.03.88**

(51) Int. Cl.⁵ : **C08F 8/44, C08L 33/04, C08L 35/00, C09D 135/06, C09J 135/06**

(54) **Wässrige Sekundärdispersionen.**

(30) Priorität : **09.04.87 DE 3712016**

(43) Veröffentlichungstag der Anmeldung :
**02.11.88 Patentblatt 88/44**

(45) Bekanntmachung des Hinweises auf die
Patenterteilung :
**15.05.91 Patentblatt 91/20**

(84) Benannte Vertragsstaaten :
**AT BE CH DE ES FR GB IT LI LU NL SE**

(56) Entgegenhaltungen :
**EP-A- 0 133 949**
**FR-A- 1 099 120**
**FR-A- 2 093 844**
**FR-A- 2 505 347**
**US-A- 4 108 944**

(73) Patentinhaber : **BASF Aktiengesellschaft**
**Carl-Bosch-Strasse 38**
**W-6700 Ludwigshafen (DE)**

(72) Erfinder : **Blum, Rainer**
**Bannwasserstr. 58**
**W-6700 Ludwigshafen (DE)**
Erfinder : **Auchter, Gerhard, Dr.**
**Gute Erde 13**
**W-6800 Mannheim 31 (DE)**
Erfinder : **Osterloh, Rolf, Dr.**
**Am Kapellenbusch 2**
**W-5042 Erftstadt (DE)**
Erfinder : **Rehmer, Gerd, Dr.**
**Königsberger Str. 1**
**W-6712 Bobenheim-Roxheim (DE)**
Erfinder : **Neubert, Gerhard, Dr.**
**Panoramastr. 11**
**W-6719 Battenberg (DE)**

EP 0 288 763 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wäßrige Sekundärdispersionen, erhältlich im wesentlichen durch

I Polymerisation in organischen Lösungsmitteln oder Lösungsmittelgemischen von

A) 30 bis 95 Gew.% Estern der Acrylsäure und/oder Methacrylsäure und/oder Ethylacrylsäure mit $C_1$-$C_{20}$-Alkoholen in Gegenwart von

B) 5 bis 70 Gew.% carboxylgruppen- und/oder carbonsäureanhydridgruppenhaltigen Copolymerisaten mit einem mittleren Molekulargewicht von 500 bis 20.000, erhältlich durch Masse- oder Lösungspolymerisation von monoolefinisch ungesättigten Monomeren bei Temperaturen von 180 bis 400°C und Drücken zwischen 1 und 200 bar, und

II Neutralisation der Carboxylgruppen und/oder Carbonsäureanhydridgruppen des Copolymerisates (I) mit anorganischen oder organischen Basen und Dispergierung in Wasser oder Wasser/Lösemittel-Gemischen sowie die Verwendung dieser Dispersionen zur Herstellung von Lacken, Beschichtungs- und Klebemitteln.

Wäßrige anionisch stabilisierte Sekundärdispersionen als Bindemittel für die verschiedensten Anwendungsgebiete auf dem Beschichtungssektor zählen seit langem zum Stand der Technik. Zu deren Herstellung werden Polymere mit eingebauten Carboxylgruppen oder Carbonsäureanhydridgruppen im allgemeinen mit Monoaminen oder Ammoniak teilweise oder vollständig neutralisiert und mit Wasser dispergiert. Häufig wird auch die umgekehrte Dispergierung durchgeführt, d.h. die Polymere werden in Wasser eindispergiert, wobei die Amine im Polymer oder im Wasser enthalten sein können.

Solche Sekundärdispersionen besitzen gegenüber den Primärdispersionen den Vorteil, daß sie ohne die für viele Anwendungen störenden Emulgatoren oder Schutzkolloide hergestellt werden können. Nachteilig ist, daß sie einen recht hohen Anteil an Carboxylgruppen enthalten müssen, um stabile Dispersionen zu bilden, die auch mit Pigmenten oder Vernetzern verträglich sind. Acrylatharze für Sekundärdispersionen benötigen im allgemeinen, in Abhängigkeit vom Aufbau aus hydrophilen oder hydrophoben Bausteinen, ca. 7 bis 10 Gew.% Acrylsäure. Diese Säure benötigt entsprechend hohe Mengen an Neutralisationsmittel, das beim Antrocknen Umweltprobleme bereitet. Auch beim Einbrennen und besonders bei rein physikalischer Trocknung verbleibt ein Teil der Carboxylgruppen im Film und erhöht unerwünscht die Hydrophilie.

In der EP-A 0 133 949 werden wasserverdünnbare Beschichtungsmittel beschrieben, die aus einer mit Wasser emulgierbaren Kombination aus einer Lösung eines physikalisch trocknenden Polymeren in organischen Lösungsmitteln, einem durch Salzbildung wasserlöslichen Polymeren und gegebenenfalls einem Weichmachungsmittel bestehen. Diese Kombinationen weisen die Vorteile guter Naßhaftung, schneller Trocknung und geringer Alkaliempfindlichkeit auf. Jedoch benötigen auch sie Pigmentnetzmittel und/oder Pigmentverteiler zum Anteigen der Pigmente und Füllstoffe. Außerdem enthalten sie beträchtliche Anteile organischer Lösungsmittel, was im Hinblick auf den Umweltschutz nicht erwünscht ist.

Zur Senkung des Säuregehalts wurden spezielle Zweistufen-Polymerisate vorgeschlagen. So wird in der EP 0 225 612 ein Verfahren zur Herstellung stabiler physikalisch trocknender wäßriger Polymerdispersionen beschrieben, bei dem stufenweise zwei verschiedene Copolymere in organischer Lösung hergestellt werden, die dann unter Zusatz von Ammoniak in Wasser dispergiert werden.

Aufgabe der vorliegenden Erfindung war es, stabile wäßrige Dispersionen für hydrophobe Beschichtungen bereitzustellen.

Es wurde nun gefunden, daß diese Aufgabe mit wäßrigen Polymerdispersionen gelöst werden kann, erhältlich im wesentlichen durch

I Polymerisation in organischen Lösungsmitteln oder Lösungsmittelgemischen von

A) 30 bis 95 Gew.% Estern der Acrylsäure und/oder Methacrylsäure und/oder Ethylacrylsäure mit $C_1$-$C_{20}$-Alkoholen in Gegenwart von

B) 5 bis 70 Gew.% carboxylgruppen- und/oder carbonsäureanhydridgruppenhaltigen Copolymerisaten mit einem mittleren Molekulargewicht von 500 bis 20.000, erhältlich durch Masse- oder Lösungspolymerisation von monoolefinisch ungesättigten Monomeren bei Temperaturen von 180 bis 400°C und Drücken zwischen 1 und 200 bar, und

II Neutralisation der Carboxylgruppen und/oder Carbonsäureanhydridgruppen des Copolymerisates (I) mit anorganischen oder organischen Basen und Dispergierung in Wasser oder Wasser/Lösemittel-Gemischen.

Als Komponente (A) können Ester der Acrylsäure, Methacrylsäure oder Ethylacrylsäure mit aliphatischen $C_1$-$C_{20}$-Alkoholen, bevorzugt $C_1$-$C_8$-Alkoholen verwendet werden, wie Methylacrylat, Methylmethacrylat, Methylethacrylat, Ethylacrylat, Ethylmethacrylat, Propylacrylat, Propylmethacrylat, n-Butylacrylat, sek.-Butylacrylat, iso-Butylacrylat, tert.-Butylacrylat, n-Butylmethacrylat, sek.-Butylmethacrylat, iso-Butylmethacrylat, tert.-Butylmethacrylat, n-Butylethacrylat, 2-Ethylhexylacrylat, 2-Ethylhexylmethacrylat, Laurylacrylat, Laurylmethacrylat, Octadecylacrylat, Octadecylmethacrylat, Methylglykolacrylat, Methylglykolmethacrylat, Ethylgly-

2

kolacrylat, Ethylglykolmethacrylat, n-Propylglykolacrylat, n-Propylglykolmethacrylat, iso-Propylglykolacrylat, iso-Propylglykolmethacrylat, n-Butylglykolacrylat, n-Butylglykolmethacrylat, sek.-Butylglykolacrylat, iso-Butylglykolacrylat, tert.-Butylglykolacrylat, sek.-Butylglykolmethacrylat, iso-Butylglykolmethacrylat und tert.-Butylglykolmethacrylat, sowie mit cycloaliphatischen $C_6$-$C_{20}$-Alkoholen, bevorzugt $C_6$-$C_{10}$-Alkoholen wie Cyclohexylacrylat, Cyclohexylmethacrylat, 4-tert.-Butylcyclohexyl-1-acrylat, 2-Decalylacrylat und Tetrahydrofurfurylacrylat sowie mit aromatischen $C_6$-$C_{20}$-Alkoholen, wie Phenylacrylat, Phenylmethacrylat, Anisylacrylat und araliphatischen $C_7$-$C_{20}$-Alkoholen, wie Benzylacrylat, Benzylmethacrylat, β-Phenylethylacrylat und β-Phenoxyethylacrylat.

Weiterhin sind Monoester der Acrylsäure, Methacrylsäure oder Ethylacrylsäure mit 2- bis 6-wertigen $C_2$-$C_{18}$-Alkoholen, bevorzugt $C_2$-$C_8$-Alkoholen, geeignet, wie β-Hydroxyethylacrylat, β-Hydroxyethylmethacrylat, Propylenglykolmonoacrylat, Propylenglykolmonomethacrylat, Butandiol-1,4-monoacrylat, Butandiol-1,4-monomethylacrylat, Pentandiol-1,5-monoacrylat, Pentandiol-1,5-monomethacrylat, Hexandiol-1,6-monoacrylat, Hexandiol-1,6-monomethacrylat, Glycerinmonoacrylat, Glycerinmonomethacrylat, Trimethylolpropanmonoacrylat, Trimethylolpropanmonomethacrylat, Pentaerythritmonoacrylat, Pentaerythritmonomethacrylat, 1,4-Cyclohexan-dimethanolmonoacrylat und 1,4-Cyclohexan-dimethanolmonomethacrylat.

Bevorzugt werden Methylmethacrylat, n-Butylacrylat, n-Butylmethacrylat, tert.-Butylacrylat, tert.-Butylmethacrylat, iso-Butylacrylat, iso-Butylmethacrylat, Ethylhexylacrylat, Ethylhexylmethacrylat und Hydroxyethylacrylat eingesetzt.

Die Komponente (A) wird in einer Menge von 30 bis 95 Gew.%, bevorzugt 50 bis 80 Gew.% eingesetzt.

Geeignete Aufbaukomponenten für die Herstellung der Copolymerisate (B) sind Vinylaromaten wie Styrol, α-Methylstyrol, Chlorstyrol, Vinyltoluol, tert.-Butylstyrol ; Acrylsäure, Methacrylsäure, Haleinsäureanhybrid Ethylacrylsäure sowie Ester dieser Säuren mit $C_1$-$C_{20}$-Alkoholen, wie sie beispielsweise bei der Komponente (A) beschrieben sind, Monoester dieser Säuren mit 2- bis 6-wertigen Alkoholen, wie sie beispielsweise bei der Komponente (A) beschrieben sind, Maleinsäure, Fumarsäure sowie deren $C_1$-$C_4$-Mono- und -Dialkylester, Acrylnitril, Methacrylnitril, Acrylamidmethylolether, Methacrylamidmethylolether, Acrylamid, Methacrylamid, Glycidylacrylat und Glycidylmethacrylat, Vinylester von $C_2$-$C_4$-Carbonsäuren, wie Vinylacetat und Vinylpropionat, sowie Vinylether mit 3 bis 10 Kohlenstoffatomen, Vinylhalogenide wie Vinylchlorid und Vinylidenchlorid sowie mehrfach olefinisch ungesättigte Verbindungen wie Butadien und Isopren.

Bevorzugte Monomere sind Styrol, Acrylsäure, Methacrylsäure, Methylmethacrylat, Butylacrylat, t-Butylacrylat, t-Butylmethacrylat und 2-Ethylhexylacrylat.

Die Herstellung der Komponente (B) erfolgt nach bekannten Methoden der Massepolymerisation oder Lösungspolymerisation wie sie z.B. in der DE-OS 32 25 875 beschrieben sind, bei Temperaturen von 180 bis 400°C, bevorzugt 200 bis 350°C, besonders bevorzugt 200 bis 300°C, bei Drücken zwischen 1 und 200 bar, bevorzugt 20 bis 50 bar in Abwesenheit oder Gegenwart von hochsiedenden Lösungsmitteln wie Aromatengemischen mit einem Siedebereich von 155 bis 185°C sowie Aromaten-/Aliphaten-/Cycloaliphatengemischen mit einem Siedebereich von 120 bis 250°C und gegebenenfalls in Anwesenheit von Polymerisationsinitiatoren und Reglern. Die Copolymerisate (B) haben mittlere Molekulargewichte (Zahlenmittel) von 500 bis 20000, bevorzugt 1000 bis 10000 und Hydrierjodzahlen (DIN 53 241) von 1,3 bis 51, vorzugsweise 2,5 bis 25,4.

Bei der Herstellung der Polymeren (I) wird das Copolymerisat (B) im allgemeinen vor der Reaktion in den anderen Monomeren gelöst. Dies kann in dem zur Polymerisation verwendeten Lösungsmittel geschehen, aber auch in einem Monomeren oder Monomerengemisch.

Die Komponente (B) wird in Mengen von 5 bis 70 Gew.%, bevorzugt 20 bis 50 Gew.% eingesetzt.

Als Komponente (C) können Styrol, α-Methylstyrol, Chlorstyrol, Vinyltoluol, tert.-Butylstyrol, Acrylamidmethylolether, Methacrylamidmethylolether, Acrylsäure, Methacrylsäure, Ethylacrylsäure weiterhin Maleinsäure, Fumarsäure sowie deren $C_1$-$C_4$-Mono- und -Dialkylester, Maleinsäureanhydrid, Acrylnitril, Acrylamid oder Methacrylamid in Mengen von 0 bis 50 Gew.% mitverwendet werden. Für den Fall der Mitverwendung haben sich 5 bis 50 Gew.%, bevorzugt 10 bis 40 Gew.% bewährt.

Weiterhin können als Komponente (C) copolymerisierbare Aldehyde und/oder Ketone verwendet werden wie Acrolein, Methacrolein, Vinylalkylketone mit 1 bis 20 Kohlenstoffen im Alkylrest, Formylstyrol, Acryloxyalkanale und -alkanole, Methacryloxyalkanale und -alkanole, deren Herstellung z.B. in der DE-OS 27 22 097 beschrieben ist, N-Oxoalkylacrylamide, N-Oxoalkylmethacrylamide, wie sie u.a. in der US-PS 4 266 007, der DE-OS 20 61 213 oder der DE-OS 22 07 209 beschrieben sind, z.B. N-3-oxobutyl-acrylamid und -methacrylamid, N-1,1-dimethyl-3-oxobutylacrylamid, N-1,1-dimethyl-3-oxobutylmethacrylamid, Diacetonacrylamid, Diacetonmethacrylamid sowie N-3-oxo-1,1-dibutyl-2-propylhexylacrylamid, ferner Acetonyl- und Diacetonacrylat, Diacetonmethacrylat, Acrylamidopivalinaldehyd oder Gemische dieser Comonomeren einpolymerisiert enthalten. Bevorzugt werden die 3-Oxoalkylacrylate, 3-Oxoalkylmethacrylate und N-3-oxoalkyl-acrylamide, N-3-oxoalkyl-methacrylamide sowie Methylvinylketon, Methacrolein, Acrolein, Diacetonacrylamid, Diacetonmethacrylamid, 2-Ketobutyl-acrylat und 2-Ketobutyl-methacrylat.

Die Copolymeren (I) enthalten im allgemeinen 1 bis 10 Gew.% Carbonsäuren, bevorzugt 1 bis 5 Gew.%, besonders bevorzugt 2 bis 3 Gew.%.

Die Herstellung der Copolymeren (I) erfolgt nach bekannten Polymerisationsmethoden bevorzugt in Lösungsmitteln wie Aromatengemischen mit einem Siedebereich von 120 bis 250°C sowie Aromaten-/Aliphaten-/Cycloaliphatengemisch mit einem Siedebereich von 120 bis 250°C bei Temperaturen von 60 bis 180°C, bevorzugt 140 bis 160°C, bei Normaldruck bis 10 bar mit Polymerisationsinitiatoren wie Cumolhydroperoxid, tert.-Butylperbenzoat, Benzoylperoxid und gegebenenfalls Reglern wie Dodecylmercaptan oder Mercaptoethanol.

Die Herstellung der Copolymeren (I) kann auch zweistufig erfolgen, indem zunächst in einem Lösungsmittel oder Lösungsmittelgemisch die Komponente (B) hergestellt wird, die dann mit den Komponenten (A) und (C) weiter umgesetzt wird.

Die Copolymere (I) können je nach eingesetzten Comonomeren unvernetzt bis vernetzt sein. Vernetzung tritt im allgemeinen bei Verwendung von beispielsweise Glycidylacrylat, Glycidylmethacrylat und Acrylamidmethylolether als Comonomere auf.

Für die Neutralisation der Carboxylgruppen und/oder Carbonsäureanhydridgruppen des Copolymerisats (I) finden im allgemeinen anorganische oder organische Basen wie Ammoniak, Triethylamin, Ethanolamin, Triethanolamin, Dimethylethanolamin, Diisopropylethanolamin Verwendung. Die Neutralisation kann mit einem Neutralisationsgrad 5 bis 200 %, bevorzugt 20 bis 120 %, besonders bevorzugt 50 bis 110 % durchgeführt werden.

Die Dispergierung der Copolymerisate (I) kann so erfolgen,
– daß die anorganischen oder organischen Basen mit den Copolymerisaten (I) bei 20 bis 100°C, bevorzugt 30 bis 70°C gemischt werden und in diese Mischung Wasser oder Wasser/Lösungsmittelgemische eindispergiert werden oder
– daß die anorganischen oder organischen Basen mit den Copolymerisaten (I) bei 20 bis 100°C, bevorzugt 30 bis 70°C gemischt werden und diese Mischung in Wasser oder Wasser/Lösungsmittelgemische eindispergiert werden oder
– daß die Copolymerisate (I) nicht oder nur teilweise mit den anorganischen oder organischen Basen neutralisiert werden und in Wasser oder Wasser/Lösungsmittelgemische, die die zur Neutralisation benötigte Gesamtmenge bzw. Teilmenge an anorganischen oder organischen Basen enthalten, eindispergiert werden.

Nach der Dispergierung können die Lösungsmittel bei Normaldruck oder unter Vakuum ganz oder teilweise destillativ entfernt werden.

Werden als Komponente (C) copolymerisierbare Aldehyde und/oder Ketone mitverwendet, so können als Vernetzer Polyhydrazide, wie sie beispielsweise in der EP-A 219 046 genannt sind, eingesetzt werden.

Geeignete Polyhydrazide sind z.B. Dihydrazide organischer Di- und Oligocarbonsäuren. Als Beispiele seien genannt : Malonsäure-, Bernsteinsäure-, Glutarsäure-, Adipinsäure-, Pimelinsäure-, Korksäure-, Azelainsäure-, Sebacinsäure-, Undecandisäure-, Dodecandisäure-, Tridecandisäure-, Tetradecandisäure-, Pentadecandisäure-, Hexadecandisäure-, 2-Methyl-tetradecan disäure-dihydrazid, ferner Methyl-, Ethyl-, Propyl-, Butyl-, Hexyl-, Heptyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octylbernsteinsäuredihydrazid, 2-Ethyl-3-propyl-bernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäure-und Benzylmalonsäuredihydrazid, Pentan-1,3,5-tricarbonsäuretrihydrazid, Hex-4-en-1,2,6-tricarbonsäuretrihydrazid, 3-Cyan-pentan-1,3,5-tricarbonsäuretrihydrazid, Dicyanfumarsäuredihydrazid, ferner die Di- bzw. Oligohydrazide von dimerisierten bzw. oligomerisierten ungesättigten Fettsäuren.

Die Polyhydrazide werden mit den Copolymerisaten (I) im allgemeinen in solchen Mengen kombiniert, daß die Hydrazidgruppen zu Carbonylgruppen der Copolymerisate (I) im Äquivalentverhältnis von 0,1 : 2, vorzugsweise 0,1 : 1 zur Umsetzung eingesetzt werden.

Bei der Verwendung von Polyhydraziden als Vernetzungsmittel können Stabilisatoren aus der Klasse der Monoketone und/oder Monoaldehyde mitverwendet werden, vorzugsweise solchen mit jeweils Siedepunkten von 30 bis 200°C, z.B. aliphatische, cycloaliphatische, aromatische und/oder araliphatische Ketone und Aldehyde, wie Acetaldehyd, Propionaldehyd, Butyraldehyd, Benzaldehyd, Phenylacetaldehyd und Terpenaldehyde ; oder als Ketone z.B. Dialkylketone, wie Aceton, Methylethylketon, Diethylketon, i-Propylmethylketon, n-Propylmethylketon, Di-i- und Di-n-propylketon, t-Butylmethylketon, i-Butylmethylketon, sec.-Butylmethylketon, Di-isobutylketon, cycloaliphatische Ketone, wie Cyclohexanon und aromatisch-aliphatische Ketone, wie Acetophenon. Bevorzugt werden Dialkylketone mit Siedepunkten von 50 bis 150°C verwendet.

Bei sehr stabilen Sekundärdispersionen mit geringen Anteilen an Lösungsmitteln kann auf die Zugabe der Stabilisatoren verzichtet werden.

4

Der Feststoffgehalt der Sekundärdispersionen beträgt 10 bis 80 Gew.%, bevorzugt 25 bis 70 Gew.%.

Außer den Polyhydraziden können auch Vernetzer aus der Gruppe der Polyisocyanate, teilweise bis vollständig geblockte Polyisocyanate, Epoxidharze oder Aminoplastharze sowie geeignete Katalysatoren und Hilfsstoffe bei der Herstellung von Lacken, Beschichtungs- und Klebemitteln mitverwendet werden.

Die wäßrigen Sekundärdispersionen sind lagerstabil und ergeben nach dem Auftrag auf Substrate hydrophobe Beschichtungen mit hoher Wasserfestigkeit.

Als bevorzugte Anwendungsgebiete kommen die Korrosionsschutzanstriche und die Straßenmarkierungsfarben in Frage.

Beispiele

Herstellung der wäßrigen Sekundärdispersionen

In einem Reaktionsgefäß wurden die jeweils in den Beispielen 1 bis 5 aufgeführten Vorlagen auf 80°C erhitzt und die Zuläufe 1 und 2 in 2 Stunden zugegeben. 1 Stunde nach Zulaufende wurde Zulauf 3 in 10 Minuten zugegeben und noch 1 Stunde auf 80°C gehalten.

Es wurde auf 35°C abgekühlt, Zulauf 4 einlaufen lassen und bei 35°C 1 Stunde gerührt. Danach wurde Zulauf 5 in 2 Stunden zugegeben und gleichzeitig unter leichtem Vakuum ca. 160 g Isobutanol/Wasser-Gemisch abdestilliert.

Beispiele 1, 2, 3 und Vergleichsbeispiel 2 bildeten stabile, sehr feinteilige, milchig weiße Dispersionen.

Zur Dispersion nach Beispiel 3 wurden noch 16 g Adipinsäurebishydrazid 1 Stunde eingerührt.

Vergleichsbeispiel 1 bildete eine grobflockige Suspension, die beim Stehen koagulierte.

Der Feststoffanteil der Dispersionen betrug ca. 50 Gew.%.

| | Bsp. 1 | Bsp. 2 | Bsp. 3 | Vgl.- | Vgl.- |
|---|---|---|---|---|---|
| | (erfindungsgemäß) | | | Bsp. 1 | Bsp. 2 |
| | [g] | [g] | [g] | [g] | [g] |
| Vorlage: | | | | | |
| Isobutanol | 300 | 300 | 300 | 300 | 300 |
| | | | | | |
| Zulauf 1: | | | | | |
| Butylacrylat | 340 | 340 | 300 | 340 | 300 |
| tert.-Butylacrylat | 220 | 220 | 220 | 220 | 220 |
| Styrol | – | 16,8 | 16,8 | 117,6 | 110 |

| | Bsp. 1 | Bsp. 2 | Bsp. 3 | Vgl.- | Vgl.- |
| | | (erfindungsgemäß) | | Bsp. 1 | Bsp. 2 |
| | [g] | [g] | [g] | [g] | [g] |
| Methacrylsäure | - | 3,2 | 3,2 | 22,4 | 70 |
| *) | 140 | 120 | 120 | - | - |
| Diacetonacrylamid | - | - | 30 | - | - |
| Zulauf 2: | | | | | |
| tert.-Butylperoctoat | 28 | 28 | 28 | 28 | 28 |
| Zulauf 3: | | | | | |
| tert.-Butylperoctoat | 7 | 7 | 7 | 7 | 7 |
| Zulauf 4: | | | | | |
| Ammoniak (25 gew.%ige wäßrige Lösung) | 18 | 18 | 18 | 18 | 56 |
| Zulauf 5: | | | | | |
| VE-Wasser | 700 | 700 | 700 | 700 | |

*) Copolymerisat aus 84 Teilen Styrol und 16 Teilen Methacrylsäure mit einem mittleren Molekulargewicht von 1870 (gelöst in den übrigen Bestand- teilen von Zulauf 1)

Vergleichstest der Beispiele

Es wurden von den Dispersionen auf je 2 Glasplatten (6 × 25 cm) mit einer Rakel Filme aufgezogen. Platte A wurde 1 Woche bei Raumtemperatur gelagert, Platte B wurde 5 Stunden bei Raumtemperatur getrocknet und dann 20 min bei 110°C eingebrannt. Die Platten wurden dann zur Hälfte in VE-Wasser (vollentsalzt) bei Raumtemperatur gelagert.

| | Beispiele | | | | | | | | | |
|---|---|---|---|---|---|---|---|---|---|---|
| | 1 | | 2 | | 3 | | 4 | | 5 | |
| | A | B | A | B | A | B | A | B | A | B |
| Filme | keine Film-bildung | | klar | | homogen | | | | | |
| Schichtdicke (cm) | - | - | | | ca. 70 $\mu$m | | | | | |
| Wasserlagerung | | | | | | | | | | |
| 1 Tag | - | - | klar | klar | Spur trüb | klar | klar | klar | weiß-trüb | weiß-trüb |
| 3 Tage | - | - | Spur trüb | Spur trüb | trüb | Spur trüb | klar | klar | abge-löst | abge-löst |
| 10 Tage | - | - | Spur trüb | Spur trüb | trüb | trüb | klar | klar | abge-löst | abge-löst |

**Ansprüche**

1. Wäßrige Sekundärdispersionen, erhältlich im wesentlichen durch

I Polymerisation in organischen Lösungsmitteln oder Lösungsmittelgemischen von

A) 30 bis 95 Gew.% Estern der Acrylsäure und/oder Methacrylsäure und/oder Ethylacrylsäure mit $C_1$-$C_{20}$-Alkoholen in Gegenwart von

B) 5 bis 70 Gew.% carboxylgruppen- und/oder carbonsäureanhydridgruppenhaltigen Copolymerisaten mit einem mittleren Molekulargewicht von 500 bis 20.000, erhältlich durch Masse- oder Lösungspolymerisation von monoolefinisch ungesättigten Monomeren bei Temperaturen von 180 bis 400°C und Drücken zwischen 1 und 200 bar, und

II Neutralisation der Carboxylgruppen und/oder Carbonsäureanhydridgruppen des Copolymerisats (I) mit anorganischen oder organischen Basen und Dispergierung in Wasser oder Wasser/Lösemittel-Gemischen.

2. Wäßrige Sekundärdispersionen nach Anspruch 1, erhältlich im wesentlichen durch

I Polymerisation in organischen Lösungsmitteln oder Lösungsmittelgemischen von

A) 30 bis 90 Gew.% Estern der Acrylsäure und/oder Methacrylsäure und/oder Ethylacrylsäure mit $C_1$-$C_{20}$-Alkoholen in Gegenwart von

B) 5 bis 70 Gew.% carboxylgruppen- und/oder carbonsäureanhydridgruppenhaltigen Copolymerisaten mit einem mittleren Molekulargewicht von 500 bis 20.000, erhältlich durch Masse- oder Lösungspolymerisation von monoolefinisch ungesättigten Monomeren bei Temperaturen von 180 bis 400°C und Drücken zwischen 1 und 200 bar, mit

C) 5 bis 50 Gew.% sonstigen Comonomeren und

II Neutralisation der Carboxylgruppen und/oder Carbonsäureanhydridgruppen des Copolymerisats (I) mit anorganischen oder organischen Basen und Dispergierung in Wasser oder Wasser/Lösemittel-Gemischen.

3. Wäßrige Sekundärdispersionen nach den Ansprüchen 1 oder 2, erhältlich unter Verwendung von Monoestern der Acrylsäure und/oder Methacrylsäure und/oder Ethylacrylsäure mit 1- bis 6-wertigen aliphatischen, cycloaliphatischen und/oder aromatischen Alkoholen als Komponente (A).

4. Wäßrige Sekundärdispersionen nach einem der Ansprüche 1 bis 3, erhältlich unter Verwendung von überwiegenden Anteilen von Styrol und untergeordneten Anteilen von Acrylsäure, Methacrylsäure, Maleinsäure, Maleinsäureanhydrid und Estern der genannten Säuren mit $C_1$-$C_{20}$-Alkoholen als Aufbaukomponente

7

für die Copolymerisate (B).

5. Wäßrige Sekundärdispersionen nach einem der Ansprüche 2 bis 4, erhältlich unter Verwendung von Styrol, α-Methylstyrol, Chlorstyrol, Vinyltoluol, tert.-Butylstyrol, Acrylsäure, Methacrylsäure, Maleinsäure, Maleinsäureanhydrid, Maleinsäureester, Acrylnitril, Acrylamid, Methacrylamid, Acrylamidmethylolether und Methacrylamidmethylolether als Comonomere (C).

6. Wäßrige Sekundärdispersionen nach einem der Ansprüche 2 bis 5, erhältlich unter Verwendung von copolymerisierbaren Aldehyden und/oder Ketonen als Komponente (C).

7. Verwendung der wäßrigen Sekundärdispersionen gemäß Ansprüch 1 bis 6 zur Herstellung von Lacken, Beschichtungs- und Klebemitteln.

8. Verwendung der wäßrigen Sekundärdispersionen gemäß einem der Ansprüche 6 in Kombination mit Polyhydraziden zur Herstellung vernetzbarer Lack, Beschichtungs- und Klebemittel.

9. Verwendung der wäßrigen Sekundärdispersionen gemäß einem der Ansprüche 1 bis 6 in Kombination mit Vernetzern aus der Gruppe der Epoxidharze, Polyisocyanate, verkappten Polyisocyanate und/oder Aminoplastharze zur Herstellung vernetzbarer Lacke, Beschichtungs- und Klebemittel.

10. Verwendung der wäßrigen Sekundärdispersionen gemäß einem der Ansprüche 1 bis 6 zur Herstellung von Straßenmarkierungsfarben.

## Revendications

1. Dispersions secondaires aqueuses, pouvant être obtenues essentiellement par

I polymérisation dans des solvants ou des mélanges de solvants organiques de

A).30 à 95% en poids d'esters de l'acide acrylique et/ou de l'acide méthacrylique et/ou de l'acide éthylacrylique avec des alcools en $C_1$-$C_{20}$ en présence de

B) 5 à 70% en poids de copolymères contenant des groupements carboxyle et/ou des groupements anhydride d'acide carboxylique, ayant un poids moléculaire moyen de 500 à 20 000 et pouvant être obtenus par polymérisation en masse ou en solution de monomères insaturés mono-oléfiniquement à des températures de 180 à 400 °C et sous des pressions comprises entre 1 et 200 bars, et

II neutralisation des groupements carboxyle et/ou des groupements anhydride d'acide carboxylique du copolymère (I) par des bases inorganiques ou organiques et mise en dispersion dans de l'eau ou dans des mélanges eau/solvant.

2. Dispersions secondaires aqueuses selon la revendication 1, pouvant être obtenues essentiellement par

I polymerisation dans des solvants ou des mélanges de solvants organiques de

A) 30 à 90% en poids d'esters de l'acide acrylique et/ou de l'acide méthacrylique et/ou de l'acide éthylacrylique avec des alcools en $C_1$-$C_{20}$ en présence de

B) 5 à 70% en poids de copolymères contenant des groupements carboxyle et/ ou des groupements anhydride d'acide carboxylique, ayant un poids moléculaire moyen de 500 a 20 000 et pouvant être obtenus par polymérisation en masse ou en solution de monomères insaturés mono-oléfiniquement à des températures de 180 à 400 °C et sous des pressions comprises entre 1 et 200 bars, avec

C).5 à 50% en poids d'autres comonomères, et

II neutralisation des groupements carboxyle et/ou des groupements anhydride d'acide carboxylique du copolymère (I) par des bases inorganiques ou organiques et mise en dispersion dans de l'eau ou dans des mélanges eau/solvant.

3. Dispersions secondaires aqueuses selon la revendication 1 ou 2, pouvant être obtenues avec utilisation, en tant que composant (A), de mono-esters de l'acide acrylique et/ou de l'acide méthacrylique et/ou de l'acide éthylacrylique avec des alcools aliphatiques, cycloaliphatiques et/ou aromatiques ayant de 1 à 6 fonctions alcool.

4. Dispersions secondaires aqueuses selon l'une quelconque des revendications 1 à 3, pouvant être obtenues avec utilisation, comme composant structurel pour le ; copolymères (B), de quantités prédominantes de styrène et de quantités mineures d'acide acrylique, d'acide méthacrylique, d'acide maléique, d'anhydride maléique et d'esters de ce ; acides avec des alcools en $C_1$-$C_{20}$.

5. Dispersions secondaires aqueuses selon l'une quelconque des revendications 2 à 4, pouvant être obtenues avec utilisation, comme conomère (C), de styrène, d'α-méthylstyrène, de chlorostyrène, de vinyltoluène, de tert.-butylstyrène, d'acide acrylique, d'acide méthacrylique, d'acide maléique, d'anhydride maléique, d'ester d'acide maléique, d'acrylonitrile, d'acrylamide, de méthacrylamide, de méthyloléther d'acrylamide et de méthyloléther de méthacrylamide.

6. Dispersions secondaires aqueuses selon l'une quelconque des revendications 2 à 5, pouvant être obtenues avec utilisation, comme composant (C), d'aldéhydes et/ou de cétones copolymérisables.

EP 0 288 763 B1

7. Utilisation des dispersions secondaires aqueuses selon l'une quelconque des revendications 1 à 6 pour la préparation de vernis, de produits d'enduction et de colles.

8. Utilisation des dispersions secondaires aqueuses selon la revendication 6 en combinaison avec des polyhydrazides pour la préparation de vernis, de produits d'enduction et de colles réticulables.

9. Utilisation des dispersions secondaires aqueuses selon l'une quelconque des revendications 1 à 6 en combinaison avec des réticulants du groupe des résines époxy, des polyisocyanates, des polyisocyanates masqués et/ou des résines aminoplastes pour la préparation de vernis, de produits d'enduction et de colles réticulables.

10. Utilisation des dispersions secondaires aqueuses selon l'une quelconque des revendications 1 à 6 pour la préparation de peintures de signalisation routière.


**Claims**

1. An aqueous secondary dispersion, essentially obtainable by
I polymerization, in an organic solvent or solvent mixture, of
   A) from 30 to 95% by weight of esters of acrylic acid and/or methacrylic acid and/or ethylacrylic acid with $C_1$-$C_{20}$-alcohols in the presence of
   B) from 5 to 70% by weight of copolymers which contain carboxyl groups and/or carboxylic anhydride groups and have a mean molecular weight of from 500 to 20,000, obtainable by bulk or solution polymerization of monoolefinically unsaturated monomers at from 180 to 400°C and under from 1 to 200 bar, and
II neutralization of the carboxyl groups and/or carboxylic anhydride groups of copolymer (I) with an inorganic or organic base, and dispersion in water or a water/solvent mixture.

2. An aqueous secondary dispersion as claimed in claim 1, essentially obtainable by
I polymerization, in an organic solvent or solvent mixture, of
   A) from 30 to 90% by weight of esters of acrylic acid and/or methacrylic acid and/or ethylacrylic acid with $C_1$-$C_{20}$-alcohols in the presence of
   B) from 5 to 70% by weight of copolymers which contain carboxyl groups and/or carboxylic anhydride groups and have a mean molecular weight of from 500 to 20,000, obtainable by bulk or solution polymerization of monoolefinically unsaturated monomers at from 180 to 400°C and under from 1 to 200 bar, with
   C) from 5 to 50% by weight of other comonomers, and
II neutralization of the carboxyl groups and/or carboxylic anhydride groups of copolymer (I) with an inorganic or organic base, and dispersion in water or a water/solvent mixture.

3. An aqueous secondary dispersion as claimed in claim 1 or 2, obtainable using monoesters of acrylic acid and/or methacrylic acid and/or ethylacrylic acid with monohydric to hexahydric aliphatic, cycloaliphatic and/or aromatic alcohols as component (A).

4. An aqueous secondary dispersion as claimed in any of claims 1 to 3, obtainable using predominant amounts of styrene and minor amounts of acrylic acid, methacrylic acid, maleic acid, maleic anhydride and esters of the stated acids with $C_1$-$C_{20}$-alcohols as a component for the copolymers (B).

5. An aqueous secondary dispersion as claimed in any of claims 2 to 4, obtainable using styrene, α-methyl-styrene, chlorostyrene, vinyltoluene, tert-butylstyrene, acrylic acid, methacrylic acid, maleic acid, maleic anhydride, maleates, acrylonitrile, acrylamide, methacrylamide, acrylamidomethylol ether or methacrylamidomethylol ether as comonomer (C).

6. An aqueous secondary dispersion as claimed in any of claims 2 to 5, obtainable using copolymerizable aldehydes and/or ketones as component (C).

7. Use of an aqueous secondary dispersion as claimed in any of claims 1 to 6 for the production of finishes, coating materials and adhesives.

8. Use of an aqueous secondary dispersion as claimed in claim 6 in combination with a polyhydrazide for the production of crosslinkable finishes, coating materials and adhesives.

9. Use of an aqueous secondary dispersion as claimed in any of claims 1 to 6 in combination with a crosslinking agent from the group consisting of the epoxy resins, polyisocyanates, blocked polyisocyanates and/or aminoplast resins for the production of crosslinkable finishes, coating materials and adhesives.

10. Use of an aqueous secondary dispersion as claimed in any of claims 1 to 6 for the production of road marking paints.

9